# EUROPEAN PATENT SPECIFICATION

(11) **EP 3 192 110 B1**
(45) Date of publication and mention of the grant of the patent: **09.10.2019**
(21) Application number: 15767617.2
(22) Date of filing: 27.08.2015
(51) Int. Cl.: H01M 2/12

(54) **HINGED VENT FOR ELECTROCHEMICAL CELL SYSTEM AND METHOD**
SCHWENKBARE ENTLÜFTUNG FÜR ELEKTROCHEMISCHES ZELLSYSTEM UND VERFAHREN
ÉVENT ARTICULÉ POUR SYSTÈME DE CELLULE ÉLECTROCHIMIQUE ET PROCÉDÉ

(30) Priority: 12.09.2014 US 201462049846 P; 05.01.2015 US 201514589813
(43) Date of publication of application: 19.07.2017
(73) Proprietor: CPS Technology Holdings LLC, New York, New York 10281 (US)
(72) Inventor: TYLER, Matthew R., New York, NY 10021 (US)
(74) Representative: Trinks, Ole
(86) International application number: PCT/US2015/047103
(87) International publication number: WO 2016/039995

(56) References cited:
- EP-A1- 1 258 931
- JP-A- 2005 071 836
- US-A1- 2007 154 782
- US-A1- 2011 212 350
- US-A1- 2012 021 262

## Description

### CROSS REFERENCE TO RELATED APPLICATIONS

*This application claims priority from and the benefit of* U.S. Provisional Application Serial No. 62/049846, *entitled "HINGED VENT DESIGN", filed September 12,* 2014.

### BACKGROUND

The present disclosure relates generally to the field of batteries and battery modules. More specifically, the present disclosure relates to venting for lithium-ion (Li-ion) electrochemical cells.

This section is intended to introduce the reader to various aspects of art that may be related to various aspects of the present disclosure, which are described below. This discussion is believed to be helpful in providing the reader with background information to facilitate a better understanding of the various aspects of the present disclosure. Accordingly, it should be understood that these statements are to be read in this light, and not as admissions of prior art.

A vehicle that uses one or more battery systems for providing all or a portion of the motive power for the vehicle can be referred to as an xEV, where the term "xEV" is defined herein to include all of the following vehicles, or any variations or combinations thereof, that use electric power for all or a portion of their vehicular motive force. For example, xEVs include electric vehicles (EVs) that utilize electric power for all motive force. As will be appreciated by those skilled in the art, hybrid electric vehicles (HEVs), also considered xEVs, combine an internal combustion engine propulsion system and a battery-powered electric propulsion system, such as 48 Volt (V) or 130V systems. The term HEV may include any variation of a hybrid electric vehicle. For example, full hybrid systems (FHEVs) may provide motive and other electrical power to the vehicle using one or more electric motors, using only an internal combustion engine, or using both. In contrast, mild hybrid systems (MHEVs) disable the internal combustion engine when the vehicle is idling and utilize a battery system to continue powering the air conditioning unit, radio, or other electronics, as well as to restart the engine when propulsion is desired. The mild hybrid system may also apply some level of power assist, during acceleration for example, to supplement the internal combustion engine. Mild hybrids are typically 96V to 130V and recover braking energy through a belt or crank integrated starter generator. Further, a micro-hybrid electric vehicle (mHEV) also uses a "Stop-Start" system similar to the mild hybrids, but the micro-hybrid systems of a mHEV may or may not supply power assist to the internal combustion engine and operates at a voltage below 60V. For the purposes of the present discussion, it should be noted that mHEVs typically do not technically use electric power provided directly to the crankshaft or transmission for any portion of the motive force of the vehicle, but an mHEV may still be considered as an xEV since it does use electric power to supplement a vehicle's power needs when the vehicle is idling with internal combustion engine disabled and recovers braking energy through an integrated starter generator. In addition, a plug-in electric vehicle (PEV) is any vehicle that can be charged from an external source of electricity, such as wall sockets, and the energy stored in the rechargeable battery packs drives or contributes to drive the wheels. PEVs are a subcategory of EVs that include all-electric or battery electric vehicles (BEVs), plug-in hybrid electric vehicles (PHEVs), and electric vehicle conversions of hybrid electric vehicles and conventional internal combustion engine vehicles.

xEVs as described above may provide a number of advantages as compared to more traditional gas-powered vehicles using only internal combustion engines and traditional electrical systems, which are typically 12V systems powered by a lead acid battery. For example, xEVs may produce fewer undesirable emission products and may exhibit greater fuel efficiency as compared to traditional internal combustion vehicles and, in some cases, such xEVs may eliminate the use of gasoline entirely, as is the case of certain types of EVs or PEVs.

As technology continues to evolve, there is a need to provide improved power sources, particularly battery modules, for such vehicles. For example, in traditional configurations, electrochemical cells include vents with bulky and/or extra components that may reduce venting efficiency and may increase a cost or volume of the battery module. Further, condensation entering in vent may affect negatively the battery. Accordingly, it is now recognized that an improved vent for electrochemical cells is needed.

### SUMMARY

A summary of certain embodiments disclosed herein is set forth below. The present invention is set forth in the independent claims 1,5 and 12.

The present disclosure relates to an electrochemical cell having a housing configured to house one or more electrodes of the electrochemical cell. The housing includes a wall having an inner surface facing the one or more electrodes. The electrochemical cell also includes a hinged vent stamped on the inner surface of the wall, where the hinged vent includes a fracture portion, a hinge portion on either side of the fracture portion extending substantially parallel to the fracture portion, and connecting portions extending between the fracture portion and the hinge portions. The fracture portion includes a first cross-sectional width through the wall of the housing and the hinge portion includes a second-cross sectional width through the wall of the housing greater than the first cross-sectional width.

The present disclosure also relates to a housing of an electrochemical cell. The housing includes an open bottom end configured to receive one or more electrodes, a closed top portion opposite to the bottom end, and side panels extending between the open bottom end and the closed top portion. The side panels may be integral with the closed top portion. Further, the housing includes a hinged vent on an inner surface of the closed top portion of the housing, where the hinged vent includes a fracture portion, a hinge portion on either side of the fracture portion, and connecting portions extending from either end of the fracture portion to either end of the hinge portions. The fracture portion, the hinge portion, and the connecting portions each include respective grooves that open into the housing.

The present disclosure also relates to a method of manufacturing a stamped vent on a housing of an electrochemical cell. The method includes stamping an inner surface of the top wall of the housing with a stamp comprising a fracture portion of the stamped vent, hinge portions of the stamped vent on either side of the fracture portion and shallower than the fracture portion, and connecting portions of the stamped vent extending from either end of the fracture portion to either end of the hinge portions.

### DRAWINGS

Various aspects of this disclosure may be better understood upon reading the following detailed description and upon reference to the drawings in which:
FIG. 1 is a perspective view of a vehicle having a battery system configured in accordance with present embodiments to provide power for various components of the vehicle;
FIG. 2 is a cutaway schematic view of an embodiment of the vehicle and the battery system of FIG. 1;
FIG. 3 is a cutaway perspective view of an embodiment of a battery module in accordance with the present disclosure for use in the vehicle of FIG. 1;
FIG. 4 is an exploded perspective view of an embodiment of an electrochemical cell having a housing with a hinged vent in accordance with the present disclosure, for use in the battery module of FIG. 3;
FIG. 5 is a bottom view of an embodiment of the hinged vent of FIG. 4;
FIG. 6 is a cross-sectional view of an embodiment of the hinged vent of FIG. 5, taken along line 6-6;
FIG. 7 is a cross-sectional view of an embodiment of the hinged vent of FIG. 6 in a fracture condition in accordance with the present disclosure;
FIG. 8 is a cross-sectional side view of a portion of an embodiment of a hinged vent for an electrochemical cell in accordance with the present disclosure;
FIG. 9 is a cross-sectional side view of a portion of an embodiment of a hinged vent for an electrochemical cell in accordance with the present disclosure;
FIG. 10 is a cross-sectional side view of a portion of an embodiment of a hinged vent for an electrochemical cell in accordance with the present disclosure;
FIG. 11 is a bottom schematic view of an embodiment of a hinged vent for an electrochemical cell in accordance with the present disclosure;
FIG. 12 is a bottom schematic view of an embodiment of a hinged vent for an electrochemical cell in accordance with the present disclosure;
FIG. 13 is a bottom schematic view of an embodiment of a hinged vent for an electrochemical cell in accordance with the present disclosure; and
FIG. 14 is a process flow diagram of an embodiment of a method of manufacturing a hinged vent for an electrochemical cell in accordance with the present disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The battery systems described herein may be used to provide power to various types of electric vehicles (xEVs) and other high voltage energy storage/expending applications (e.g., electrical grid power storage systems). Such battery systems may include one or more battery modules, each battery module having a number of battery cells (e.g., lithium-ion (Li-ion) electrochemical cells) arranged to provide particular voltages and/or currents useful to power, for example, one or more components of an xEV. As another example, battery modules in accordance with present embodiments may be incorporated with or provide power to stationary power systems (e.g., non-automotive systems).

In accordance with the present disclosure, an electrochemical cell includes a housing and an electrode disposed inside the housing. During operation of the electrochemical cell, or during operation of a battery module having the electrochemical cell, a pressure inside the housing of the electrochemical cell may increase due to interaction of certain elements within the housing. For example, the electrodes of the electrochemical cell may expand, thereby reducing an air volume inside the housing of the electrochemical cell. The reduced air volume causes gases within the electrochemical cell to exert a pressure against the housing. Accordingly, a hinged vent is included on an internal surface of the housing to enable the gases to vent from the housing if the pressure inside the housing exceeds a pressure threshold of the hinged vent.

The hinged vent is stamped on the internal surface of the housing to provide a fracture portion and a hinge portion. In other words, the hinged vent is integral with the housing. For example, the fraction portion of the hinged vent is stamped into the internal surface of the housing such that a cross-sectional width of the housing along the fracture portion is a first width. The hinged portion of the hinged vent is stamped into the internal surface of the housing adjacent the fracture portion such that a cross-sectional width of the housing along the hinged portion is a second width. In accordance with the present disclosure, the first width is less than the second width. Thus, the first width (of the fracture portion) may fracture in response to a lower internal pressure than the second width (of the hinge portion). After the fracture portion fractures, the internal gases exiting the housing cause the housing to bend along the hinged portion, thereby increasing a venting area as the housing bends. Further, the hinged vent is stamped into the internal surface such that grooves of the hinged vent face downwardly. For example, the hinged vent is stamped on an internal surface of a top portion or cover of the housing (e.g., an inside of the housing). Accordingly, grooves in the housing caused by the stamping of the hinged vent do not collect condensation or moisture, as the condensation or moisture would fall from the grooves due to gravitational forces.

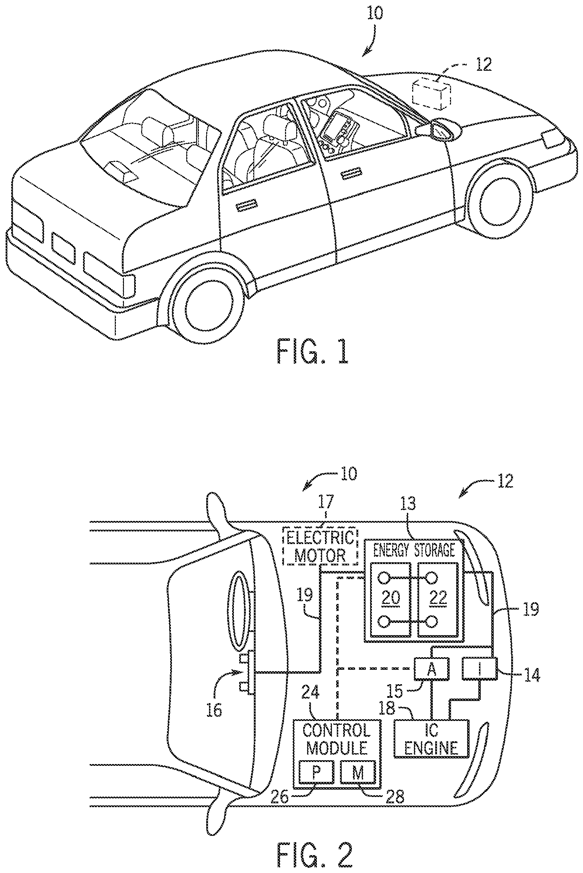

To help illustrate, FIG. 1 is a perspective view of an embodiment of a vehicle 10, which may utilize a regenerative braking system. Although the following discussion is presented in relation to vehicles with regenerative braking systems, the techniques described herein are adaptable to other vehicles that capture/store electrical energy with a battery, which may include electric-powered and gas-powered vehicles.

As discussed above, it would be desirable for a battery system 12 to be largely compatible with traditional vehicle designs. Accordingly, the battery system 12 may be placed in a location in the vehicle 10 that would have housed a traditional battery system. For example, as illustrated, the vehicle 10 may include the battery system 12 positioned similarly to a lead-acid battery of a typical combustion-engine vehicle (e.g., under the hood of the vehicle 10). Furthermore, as will be described in more detail below, the battery system 12 may be positioned to facilitate managing temperature of the battery system 12. For example, in some embodiments, positioning a battery system 12 under the hood of the vehicle 10 may enable an air duct to channel airflow over the battery system 12 and cool the battery system 12.

A more detailed view of the battery system 12 is described in FIG. 2. As depicted, the battery system 12 includes an energy storage component 13 coupled to an ignition system 14, an alternator 15, a vehicle console 16, and optionally to an electric motor 17. Generally, the energy storage component 13 may capture/store electrical energy generated in the vehicle 10 and output electrical energy to power electrical devices in the vehicle 10.

In other words, the battery system 12 may supply power to components of the vehicle's electrical system, which may include radiator cooling fans, climate control systems, electric power steering systems, active suspension systems, auto park systems, electric oil pumps, electric super/turbochargers, electric water pumps, heated windscreen/defrosters, window lift motors, vanity lights, tire pressure monitoring systems, sunroof motor controls, power seats, alarm systems, infotainment systems, navigation features, lane departure warning systems, electric parking brakes, external lights, or any combination thereof. Illustratively, in the depicted embodiment, the energy storage component 13 supplies power to the vehicle console 16 and the ignition system 14, which may be used to start (e.g., crank) the internal combustion engine 18.

Additionally, the energy storage component 13 may capture electrical energy generated by the alternator 15 and/or the electric motor 17. In some embodiments, the alternator 15 may generate electrical energy while the internal combustion engine 18 is running. More specifically, the alternator 15 may convert the mechanical energy produced by the rotation of the internal combustion engine 18 into electrical energy. Additionally or alternatively, when the vehicle 10 includes an electric motor 17, the electric motor 17 may generate electrical energy by converting mechanical energy produced by the movement of the vehicle 10 (e.g., rotation of the wheels) into electrical energy. Thus, in some embodiments, the energy storage component 13 may capture electrical energy generated by the alternator 15 and/or the electric motor 17 during regenerative braking. As such, the alternator 15 and/or the electric motor 17 are generally referred to herein as a regenerative braking system.

To facilitate capturing and supplying electric energy, the energy storage component 13 may be electrically coupled to the vehicle's electric system via a bus 19. For example, the bus 19 may enable the energy storage component 13 to receive electrical energy generated by the alternator 15 and/or the electric motor 17. Additionally, the bus 19 may enable the energy storage component 13 to output electrical energy to the ignition system 14 and/or the vehicle console 16. Accordingly, when a 12 volt battery system 12 is used, the bus 19 may carry electrical power typically between 8-18 volts.

Additionally, as depicted, the energy storage component 13 may include multiple battery modules. For example, in the depicted embodiment, the energy storage component 13 includes a lithium ion (e.g., a first) battery module 20 and a lead-acid (e.g., a second) battery module 22, which each includes one or more battery cells. In other embodiments, the energy storage component 13 may include any number of battery modules. Additionally, although the lithium ion battery module 20 and lead-acid battery module 22 are depicted adjacent to one another, they may be positioned in different areas around the vehicle. For example, the lead-acid battery module 22 may be positioned in or about the interior of the vehicle 10 while the lithium ion battery module 20 may be positioned under the hood of the vehicle 10.

In some embodiments, the energy storage component 13 may include multiple battery modules to utilize multiple different battery chemistries. For example, when the lithium ion battery module 20 is used, performance of the battery system 12 may be improved since the lithium ion battery chemistry generally has a higher coulombic efficiency and/or a higher power charge acceptance rate (e.g., higher maximum charge current or charge voltage) than the lead-acid battery chemistry. As such, the capture, storage, and/or distribution efficiency of the battery system 12 may be improved.

To facilitate controlling the capturing and storing of electrical energy, the battery system 12 may additionally include a control module 24. More specifically, the control module 24 may control operations of components in the battery system 12, such as relays (e.g., switches) within energy storage component 13, the alternator 15, and/or the electric motor 17. For example, the control module 24 may regulate amount of electrical energy captured/supplied by each battery module 20 or 22 (e.g., to de-rate and re-rate the battery system 12), perform load balancing between the battery modules 20 and 22, determine a state of charge of each battery module 20 or 22, determine temperature of each battery module 20 or 22, control voltage output by the alternator 15 and/or the electric motor 17, and the like.

Accordingly, the control unit 24 may include one or more processor 26 and one or more memory 28. More specifically, the one or more processor 26 may include one or more application specific integrated circuits (ASICs), one or more field programmable gate arrays (FPGAs), one or more general purpose processors, or any combination thereof. Additionally, the one or more memory 28 may include volatile memory, such as random access memory (RAM), and/or non-volatile memory, such as read-only memory (ROM), optical drives, hard disc drives, or solid-state drives. In some embodiments, the control unit 24 may include portions of a vehicle control unit (VCU) and/or a separate battery control module.

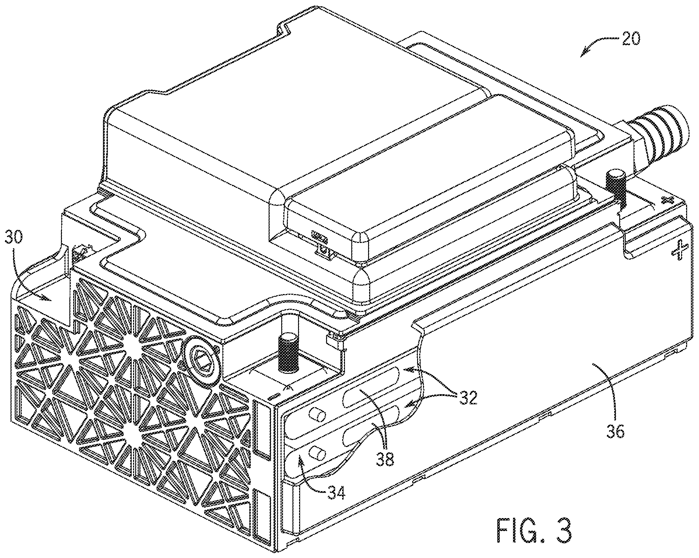

A cutaway perspective view of an embodiment of the battery module 20 of FIG. 2 is shown in FIG. 3. In the illustrated embodiment, the battery module 20 includes a housing or casing 30 configured to retain electrochemical cells 32 (e.g., prismatic lithium-ion (Li-ion) electrochemical cells) within the casing 30. The casing 30 may include an opening 34 through which the electrochemical cells 32 are disposed, and one or more covers 36 configured to cover the opening 34, retain components that interface with the electrochemical cells 32, and/or seal the casing 30.

It should be noted that the casing 30 of the battery module 20 may be configured in a manner other than what is shown in FIG. 3. For example, the casing 30 may include other open sides across different faces of the casing 30. Further, the casing 30 may not include a cover, or may include multiple covers. Further still, although the illustrated casing 30 houses up to six electrochemical cells 32, the casing 30 of the battery module 20 may house any number of electrochemical cells 32. For example, the casing 30 may house 1, 2, 3, 4, 5, 6, 7, 8, 9, 10, 11, 12, or more electrochemical cells 32.

In accordance with the present disclosure, each of the electrochemical cells 32 includes a hinged vent 38 stamped into a housing of the electrochemical cell 32, where the hinged vent 38 is configured to permit venting of gases inside the housing of the electrochemical cell 32 if an internal pressure inside the housing exceeds a pressure threshold of the hinged vent 38. Although the hinged vent 38 for each electrochemical cell 32 in the illustrated embodiment is indicated on an outside of the housing of the electrochemical cell 32, the hinged vent 38 is stamped on an internal surface of the housing of the electrochemical cell 32. The stamping procedure may cause markings on the outside of the housing of the electrochemical cell 32, as shown.

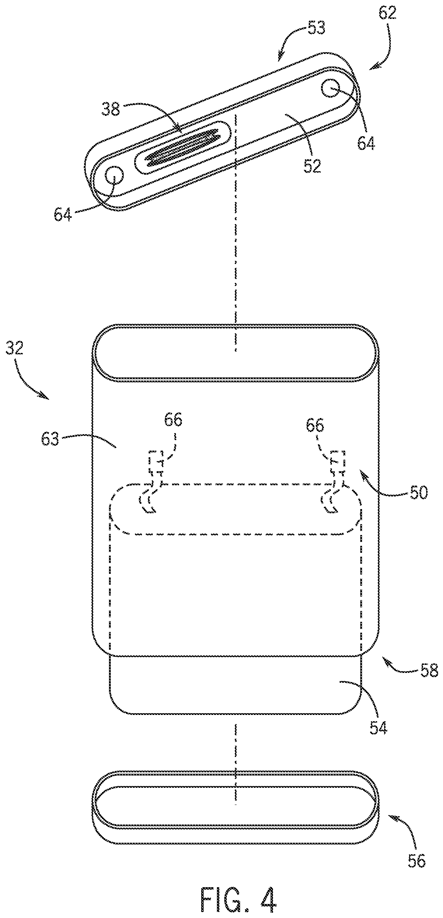

An embodiment of one of the electrochemical cells 32 having a housing 50 and the hinged vent 38 disposed on an inner surface 52 of the housing 50 is shown in an exploded perspective view in FIG. 4. In the illustrated embodiment, the electrochemical cell 32 includes the housing 50, an electrode stack 54 inside the housing 50, and a bottom cover 56. The housing 50 may be a metal housing, such as an aluminum housing. The electrode stack 54 is inserted into the housing 50 through an open bottom side 58 (e.g., open bottom portion, open bottom end) of the housing 50, and the bottom cover 56 covers the open bottom side 58. For example, the bottom cover 56 may be adhesively coupled to the housing 50 over the open bottom side 58, or the bottom cover 56 may be welded or otherwise coupled to the housing 50 over the open bottom side 58. The housing 50 also includes a top portion 62 (e.g., top wall, top side, top end). In the illustrated embodiment, the top portion 62 is detached from the housing 50 to show features disposed on the inner surface 52 of the housing 50 (e.g., the inner surface 52 of the top portion 62 of the housing 50). However, the top portion 62 may be integrally formed with the housing 50, for example, with side portions or side panels 63 of the housing 50.

As shown, the top portion 62 includes openings 64 configured to receive terminals 66 of the electrochemical cell 32. The terminals 66 may be coupled directly to the electrode stack 54, or an intervening component may retain the terminals 66 and the intervening component may interface (e.g., engage) with the electrode stack 54 for stability. Accordingly, as the electrode stack 54 is inserted into the housing 50 through the open bottom side 58, the terminals 66 extend into and through the openings 64 in the top portion 62 of the housing 50. The inner surface 52 of the top portion 62 of the housing 50 also includes the hinged vent 38. For example, as previously described, the hinged vent 38 is stamped into the inner surface 52 on the top portion 62 of the housing 50. Stamping the hinged vent 38 on a surface (e.g., the inner surface 52) of the housing 50 that faces downwardly with respect to a gravitational force reduces the potential of condensation entering (e.g., pooling) in grooves of the hinged vent 38, where condensation may negatively affect the housing 50. Further, it should be noted that an outer surface 53 opposite to the inner surface 52 may be substantially flush (e.g., without indentions, grooves, or other features) over the stamped hinged vent 38 on the inner surface 52, thereby reducing potential for condensation to form or gather on the outer surface 53. In certain embodiments, stamping of the hinged vent 38 on the inner surface 52 may cause visual markings on the outer surface 53 that do not include substantial grooves, indentions, or other features that would otherwise collect condensation and/or other liquids.

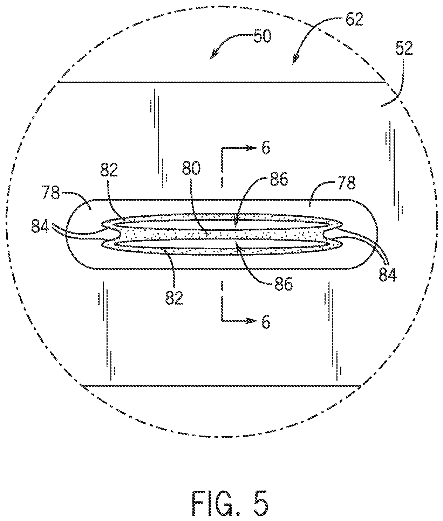

For clarity, a bottom view of an embodiment of the hinged vent 38 (e.g., on the inner surface 52 of the top portion 62 of the housing 50) is shown in FIG. 5. In the illustrated embodiment, the hinged vent 38 includes a slotted or coined area 78 and, within the slotted or coined area 78, a fracture portion 80, hinge portions 82 on either side of the fracture portion 80, and connecting portions 84 extending between the fracture portion 80 and the hinge portions 82. All of the portions 80, 82, 84 are grooves stamped into the inner surface 52 of the top portion 62 of the housing 50. Further, the slotted or coined area 78 is also stamped into the inner surface 52 of the top portion 62 of the housing 50. In general, the fracture portion 80 is stamped deeper than the hinge portions 82, such that a cross-sectional width of the top portion 62 of the housing 50 at the fracture portion 80 is less than a cross-sectional width of the top portion 62 of the housing 50 at the hinge portions 82. Thus, the fracture portion 80 fractures at a lower pressure threshold than the hinge portions 82. After an internal pressure inside the housing 50 exceeds the pressure threshold of the fracture portion 80, flaps 86 defined between the fracture portion 80 and the hinge portions 82 open about the hinge portions 82 outwardly from the fracture portion 80, enabling gases to vent from the inside of the housing 50 to the surrounding environment (e.g., cavity of the casing 30). The connecting portions 84 extending between the fracture portion 80 and the hinge portions 82 may also fracture fully or partially, along with the fracture portion 80, to enable the flaps 86 to open (e.g., rotate) about the hinge portions 82. Depending on the embodiment, the connecting portions 84 may be stamped to the same depth as the fracture portion 80, the same depth as the hinge portions 82, or to a different depth than the fracture portion 80 and the hinge portions 82. Further, the depth of the connecting portions 84 may vary along each connecting portion 84. These and other features will be described in detail below with reference to later figures.

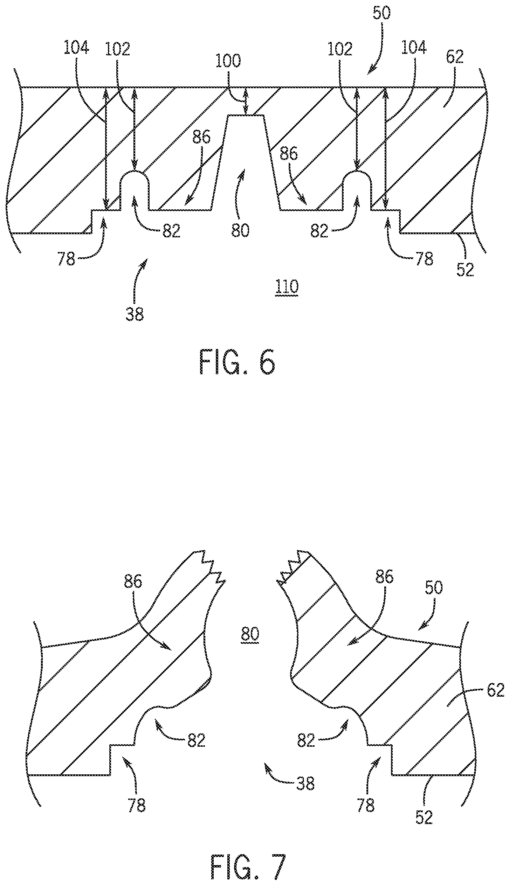

A cross-sectional view of an embodiment of the hinged vent 38 taken along line 6-6 in FIG. 5 is shown in FIG. 6. In the illustrated embodiment, the hinged vent 38 is stamped into the inner surface 52 of the top portion 62 of the housing 50, as previously described. The hinged vent 38 may be stamped via a single, one piece stamp. Alternatively, the hinged vent 38 may be stamped with multiple different stamps corresponding to certain of the features of the hinged vent 38. For example, one stamp may be used to stamp the coined area 78, and another stamp may be used to stamp the hinge portions 82, the fracture portion 80, and the connecting portions 84 (which are not visible in the illustrated cross-section).

The fracture portion 80 of the hinged vent 38 is stamped a first depth resulting in a first cross-sectional width 100 of the fracture portion 80, while the hinge portions 82 are stamped a second depth resulting in second cross-sectional widths 102 of the hinge portions 82 greater than the first cross-sectional width 100 of the fracture portion 80. The coined area 78 is stamped a third depth resulting in a third cross-sectional width 104 greater than both the first cross-sectional width 100 and the second cross sectional widths 102 of the fracture portion 80 and the hinge portions 82, respectively. Because the first cross-sectional width 100 of the fracture portion 80 is the smallest cross-sectional width across the hinged vent 38, the fracture portion 80 is configured to fracture with a pressure threshold lower than any other area of the hinged vent 38. Because the second cross-sectional widths 102 of the hinge portions 82 are smaller than any cross-sectional width across the hinged vent 38 except for the first cross-sectional width 100 of the fracture portion 80, the hinge portions 82 enable the flaps 86 of the hinged vent 38 (e.g., extending between the fracture portion 80 and the hinge portions 82) to rotate about the hinge portions 82 after the fracture portion 80 fractures (e.g., in response to an internal pressure on an inside 110 of the housing 50 exceeding the pressure threshold of the fracture portion 80). For example, a cross-sectional view of an embodiment of the hinged vent 38 in a fracture condition is shown in FIG. 7.

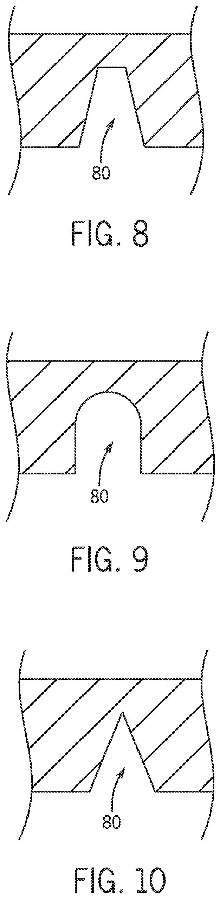

Depending on the embodiment, the stamp used to stamp the fracture portion 80 and the hinge portions 82 of the hinged vent 38 may cause the fracture portion 80 and the hinge portions 82 to take various shapes. For example, cross-sectional views of embodiments of, for example, the fracture portion 80 of the hinged vent 38 are shown in FIGS. 8-10. In FIG. 8, the stamp causes the groove of the fracture portion 80 to take the shape of a trapezoid. In FIG. 9, the stamp causes the groove of the fracture portion 80 to take the shape of a half oval or half slot. In FIG. 10, the stamp causes the groove of the fracture portion 80 to take the shape of a triangle. It should be noted that the groove of the fracture portion 80 may be any suitable shape for venting. Further, it should be noted that hinge portions 82 of the hinged vent 38 (e.g., shown in FIGS. 6 and 7) may include a groove stamped with the same or different shape(s) than that of the fracture portion 80.

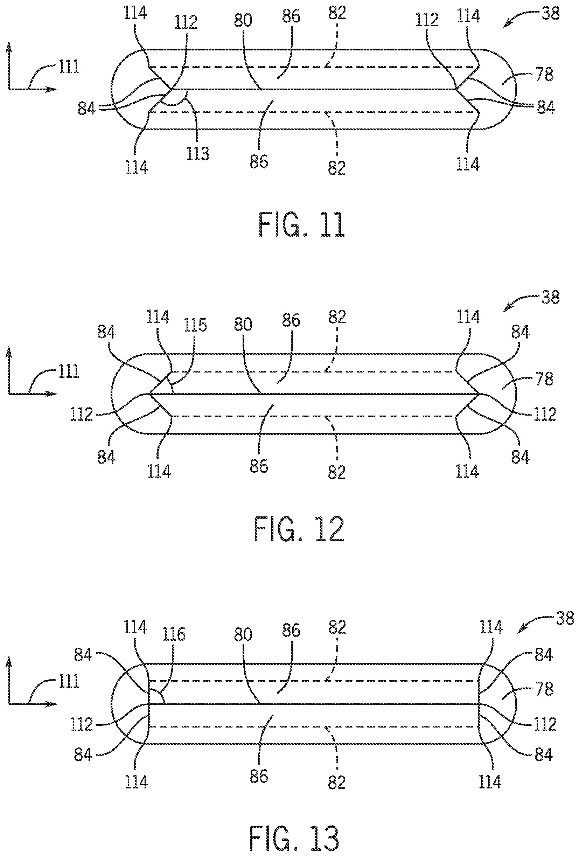

The shape of the hinged vent 38 across the inner surface 52 of the top portion 62 of the housing 50 may also vary, depending on the embodiment. The shape of the hinged vent 38 may be determined to maximize venting area (e.g., increase opening of the flaps 86), to minimize venting pressure threshold (e.g., to enable the fracture portion 80 to fracture at a lower internal pressure on the inside 100 of the housing 50), or both. For example, bottom schematic views (e.g., from within the inside 110 of the top portion 62 of the housing 50) of embodiments of the hinged vent 38 are shown in FIGS. 11-13. Focusing first on the embodiment of the hinged vent 38 in FIG. 11, the fracture portion 80 extends along the coined area 78 in direction 111. The hinge portions 82 on either side of the fracture portion 80 extend along the coined area 78 substantially parallel to the fracture portion 80 (e.g., within ±2 degrees), also in direction 111. The connecting portions 84 extend from ends 112 of the fracture portion 80 at an obtuse angle 113 and outwardly from the ends 112 and couple to the hinge portions 82. In other words, the hinge portions 82 are longer than the fracture portion 80, and the connecting portions 84 extend between the ends 112 of the fracture portion 80 and ends 114 of the hinge portions 82. The connecting portion s84 may be stamped at the same depth as the fracture portion 80.

In FIG. 12, the fracture portion 80 extends along the coined area 78 in direction 111. The hinge portions 82 on either side of the fracture portion 80 extend along the coined area 78 substantially parallel to the fracture portion 80 (e.g., within ±2 degrees), also in direction 111. The connecting portions 84 extend from the ends 112 of the fracture portion 80 at an acute angle 115 and inwardly from the ends 112 and couple to the hinge portions 82. In other words, the hinge portions 82 are shorter than the fracture portion 80, and the connecting portions 84 extend between the ends 112 of the fracture portion 80 and the ends 114 of the hinge portions 82.

In FIG. 13, the fracture portion 80 extends along the coined area 78 in direction 111. The hinge portions 82 on either side of the fracture portion 80 extend along the coined area 78 substantially parallel to the fracture portion 80 (e.g., within ±2 degrees), also in direction 111. The connecting portions 84 extend from the ends 112 of the fracture portion 80 at a substantially right angle 116 (e.g., within ±2 degrees of being perpendicular to the fracture portion 80) and couple to the hinge portions 82. In other words, the hinge portions 82 and the fracture portion 80 are the same length, and the connecting portions 84 extend between the ends 112 of the fracture portion 80 and the ends 114 of the hinge portions 82.

As previously noted, and with reference to FIGS. 6-13, the hinge portions 82 are stamped shallower than the fracture portions 80, such that the cross-sectional width 100 of the top portion 62 of the housing 50 at the fracture portion 80 is less than the cross-sectional width 102 of the top portion 62 of the housing 50 at the hinge portions 82. The connecting portions 84 may include a cross-sectional width equal to that of the fracture portion 80 (e.g., cross-sectional width 100) or equal to that of the hinge portions 82 (e.g., cross-sectional width 102). In some embodiments, the connecting portions 84 may include a tapered cross-sectional width along the connecting portions 84 from the fracture portion 80 to the hinge portions 82. For example, the connecting portions 84 may include the cross-sectional width 100 of the fracture portion 80 immediately adjacent to the fracture portion 80, cross-sectional width 102 of the hinge portions 82 immediately adjacent to the hinge portions 82, and a tapered cross-sectional width from immediately adjacent to the fracture portion 80 to immediately adjacent to the hinge portions 82.

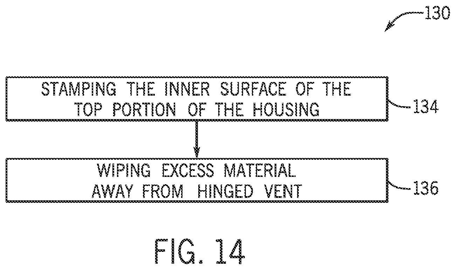

A process flow diagram of an embodiment of a method 130 of manufacturing the housing 50 with the hinged vent 38 is shown in FIG. 14. In the illustrated embodiment, the method 130 includes deep drawing the housing 50 from sheet metal (block 132). For example, the sheet metal may be lubricated and drawn or punched into the shape of the housing 50. The lubrication may be included to block tearing of the sheet metal during the deep drawing process. The sheet metal may then be pushed via a punch or stamping mechanism. In some embodiments, the sheet metal may be pushed through an opening in a component that receives the drawn sheet metal as the punch or stamping mechanism pushes the sheet metal through the opening. In general, the deep drawing process is a cold formed process.

The method 130 also includes stamping the inner surface 52 of the top portion 62 of the housing 50 with the stamp (block 134). For example, the top portion 62 may be positioned such that the stamp is disposed over the inner surface 52 of the top portion 62, and the stamp may be compressed into the inner surface 52 of the top portion 62 of the housing 50. As the stamp presses into the inner surface 52 (e.g., metal or aluminum inner surface 52), the material on the inner surface 52 is moved outwardly from the stamp. It should be noted that the stamp may include the coined area 78, or the coined area 78 may be stamped by a different stamp prior to stamping of, for example, the fracture portion 80, the hinge portions 82, and the connecting portions 84 of the hinged vent 38. Further, it should be noted that the stamp may be a feature or component of the punch or stamping mechanism described above with reference to the deep drawing process. In other words, the hinged vent 38 may be formed simultaneously with the deep drawing of the housing 50. Alternatively, the housing 50 may be deep drawn, and the stamp may be applied as an additional step of the deep drawing, cold formed process.

The method 130 further includes wiping excess material away from the hinged vent 38 (block 136). For example, after the stamp imprints the hinged vent 38 on the inner surface 52 of the top portion 62 of the housing 50, material may be deposited outside of the hinged vent 38 (e.g., outside of the coined area 78 of the hinged vent 38). In accordance with present embodiments, the excess material may be wiped away from the hinged vent 38 to block work hardening of the hinged vent 38. In general, work hardening may strengthen the hinged vent 38 (e.g., increase the pressure threshold or fracture threshold of the fracture portion 80), which may be undesirable. However, it may be desirable to work harden other areas of the housing 50, for example, side panels 63 of the housing 50. Accordingly, the excess material may be wiped toward the side panels 63, or other areas, of the housing 50, which may work harden the side panels 63 and strengthen the side panels 63. Indeed, the strengthened side panels 63 may improve resistance of the housing 50 to swelling of the electrode stacks 54 within the housing 50. Further, it should be noted that the wiping of the excess material may be done substantially simultaneously with the deep drawing of the housing 50 and/or with the stamping of the hinged vent 38, or the wiping of the excess material may be done as an additional, separate step from the deep drawing of the housing 50, from the stamping of the hinged vent 38, or both.

One or more of the disclosed embodiments, alone or in combination, may provide one or more technical effects useful in the manufacture of battery modules, and portions of battery modules. In general, embodiments of the present disclosure include an electrochemical cell having a hinged vent stamped on an inner surface of a top portion of a housing of the electrochemical cell. The hinged vent may enable venting from an inside of the housing through a fracture portion of the hinged vent. Geometries and/or depths of certain portions of the hinged vent may be determined to increase a venting area of the hinged vent, decrease a venting pressure threshold of the hinged vent, or a combination thereof. Further, the hinged vent may be stamped into the housing in such a way that the hinged vent is not work hardened. Further, excess material resulting from the stamping process may be recycled by wiping the excess material away from the hinged vent and/or down sides or side panels of the housing to work harden the side panels, which may be desirable. The technical effects and technical problems in the specification are exemplary and are not limiting. It should be noted that the embodiments described in the specification may have other technical effects and can solve other technical problems.

While only certain features and embodiments have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the disclosed subject matter.

## Claims

1. A housing (50) of an electrochemical cell (32), comprising:
- an open bottom portion (58) configured to receive one or more electrodes;
- a top portion (62) opposite to the open bottom portion (58);
- side panels (63) extending between the open bottom portion (58) and the top portion (62); and
- a hinged vent (38) on an inner surface (52) of the top portion (62) of the housing (50) facing downwardly with respect to a gravitational force, wherein the hinged vent (38) comprises a fracture portion (80), a hinge portion (82) on either side of the fracture portion (80) extending substantially parallel to the fracture portion (80), and connecting portions (84) extending from either end (112) of the fracture portion (80) to either end (114) of the hinge portions (82),
wherein the fracture portion (80), the hinge portion (82), and the connecting portions (84) each comprise respective grooves that open into the housing (50),
wherein the fracture portion (80) comprises a first cross-sectional width (100) through the top portion (62) of the housing (50), the hinge portions (82) comprise a second cross-sectional width (102) through the top portion (62) of the housing (50), and the first cross-sectional width (100) is smaller than the second cross-sectional width (102).

2. The housing (50) of claim 1,
wherein the connecting portions (84) comprise the first cross-sectional width (100) through the top portion (62) of the housing (50).

3. The housing (50) of claim 1 or 2,
comprising an aluminum top portion (62).

4. The housing (50) of one of claims 1 to 3,
wherein the side panels (63) are integral with the top portion (62), and
wherein the side panels (63) comprise excess wiped material from the hinged vent (38) on the top portion (62) to work harden the side panels (63).

5. An electrochemical cell (32), comprising:
- one or more electrodes;
- the housing (50) of one of claims 1 to 4, the housing (50) configured to house the one or more electrodes of the electrochemical cell (32), wherein the housing (50) comprises a top portion (62) having an inner surface (52) facing the one or more electrodes, wherein the top portion (62) of the housing (50) is configured to receive terminals (66) of the electrochemical cell (32); and
- a bottom cover (56) configured to cover the open bottom portion (58) of the housing (50).

6. The electrochemical cell (32) of claim 5,
wherein the fracture portion (80) is a first length, the hinge portions (82) are a second length, the first length is substantially equal to the second length, and the connecting portions (84) extend between the fracture portion (80) and the hinge portions (82) at a substantially right angle (116) from the fracture portion (80); or
wherein the fracture portion (80) is a first length, the hinge portions (82) are a second length, the first length is greater than the second length, and the connecting portions (84) extend between the fracture portion (80) and the hinge portions (82) at an acute angle (115) relative to the fracture portion (80); or
wherein the fracture portion (80) is a first length, the hinge portions (82) are a second length, the first length is less than the second length, and the connecting portions (84) extend between the fracture portion (80) and the hinge portions (82) at an obtuse angle (113) from the fracture portion (80).

7. The electrochemical cell (32) of claim 5 or 6,
wherein the connecting portions (84) comprise a cross-sectional width through the top portion (62) of the housing (50) and the cross-sectional width is equal to the first cross-sectional width (100); or
wherein the connecting portions (84) comprise a cross-sectional width through the top portion (62) of the housing (50) and the cross-sectional width is equal to the second cross-sectional width (102); or
wherein the connecting portions (84) comprise a tapered cross-sectional width that tapers from the first cross-sectional width (100) of the fracture portion (80) immediately adjacent to the fracture portion (80) to the second cross-sectional width (102) of the hinge portions (82) immediately adjacent to the hinge portions (82).

8. The electrochemical cell (32) of one of claims 5 to 7,
wherein the top portion (62) of the housing (50) is integral with side panels (63) of the housing (50).

9. The electrochemical cell (32) of one of claims 5 to 8,
wherein the hinged vent (38) comprises a coined area (78) surrounding the fracture portion (80), hinge portions (82), and connecting portions (84) of the hinged vent (38), the coined area (78) comprises a third cross-sectional width (104) through the top portion (62) of the housing (50), and the third cross-sectional width (104) is greater than the first cross-sectional width (100) and the second cross-sectional width (102).

10. The electrochemical cell (32) of one of claims 5 to 9,
wherein the grooves defining the fracture portion (80), the hinge portions (82), and the connecting portions (84) are trapezoidal grooves, triangular grooves, half oval grooves, half slot grooves, or a combination thereof.

11. The electrochemical cell (32) of one of claims 1 to 10,
wherein the electrochemical cell (32) is a prismatic cell, a lithium-ion (Li-ion) cell, or a combination thereof; and/or
wherein the housing (50) is metallic; and/or
wherein the top portion (62) comprises an outer surface opposite (53) to the inner surface (52) and the hinged vent (38) does not include features extending into, or protruding from, the outer surface (53).

12. A method (130) of manufacturing a hinged vent (38) on a housing (50) of an electrochemical cell (32) of one of the preceding claims comprising:
- stamping an inner surface (52) of a top portion (62) of the housing (50) with a stamp comprising a fracture portion (80) of the hinged vent (38), hinge portions (82) of the hinged vent (38) on either side of the fracture portion (80) and shallower than the fracture portion (80), and connecting portions (84) of the hinged vent (38) extending from either end (112) of the fracture portion (80) to either end (114) of the hinge portions (82).

13. The method (130) of claim 12,
comprising stamping a coined area (78) surrounding the fracture portion (80), the hinge portions (82), and the connecting portions (84) and shallower than the fracture portion (80), the hinge portions (82), and the connecting portions (84),
wherein the coined area (78) is preferably stamped before the fracture portion (80), the hinge portions (82), and the connecting portions (84) are stamped.

14. The method (130) of claim 12 or 13,
wherein excess material from stamping the fracture portion (80), the hinge portions (82), and the connecting portions (84) is wiped from the inner surface (52) of the top portion (62) of the housing (50) along a side inner surface of a side panel (63) of the housing (50) to work harden the side panel (63).

## Patentansprüche

1. Gehäuse (50) einer elektrochemischen Zelle (32), umfassend:
- einen offenen unteren Abschnitt (58), der ausgestaltet ist, eine oder mehrere Elektroden aufzunehmen;
- einen oberen Abschnitt (62) gegenüber des offenen unteren Abschnitts (58);
- Seitenwände (63), die sich zwischen dem offenen unteren Abschnitt (58) und dem oberen Abschnitt (62) erstrecken; und
- eine schwenkbare Entlüftung (38) an einer Innenfläche (52) des oberen Abschnitts (62) des Gehäuses (50), die in Bezug auf eine Schwerkraft nach unten zeigt, wobei die schwenkbare Entlüftung (38) einen Bruchabschnitt (80), einen schwenkbaren Abschnitt (82) auf jeder Seite des Bruchabschnitts (80), der sich im Wesentlichen parallel zu dem Bruchabschnitt (80) erstreckt, und Verbindungsabschnitte (84), die sich von jedem Ende (112) des Bruchabschnitts (80) zu jedem Ende (114) der schwenkbaren Abschnitte (82) erstrecken, umfasst, wobei der Bruchabschnitt (80), der schwenkbare Abschnitt (82) und die Verbindungsabschnitte (84) jeweils entsprechende Nuten umfasst, die sich in das Gehäuse (50) öffnen,
wobei der Bruchabschnitt (80) eine erste Querschnittsbreite (100) durch den oberen Abschnitt (62) des Gehäuses (50) umfasst, die schwenkbaren Abschnitte (82) eine zweite Querschnittsbreite (102) durch den oberen Abschnitt (62) des Gehäuses (50) umfassen, und die erste Querschnittsbreite (100) kleiner als die zweite Querschnittsbreite (102) ist.

2. Gehäuse (50) nach Anspruch 1,
wobei die Verbindungsabschnitte (84) die erste Querschnittsbreite (100) durch den oberen Abschnitt (62) des Gehäuses (50) umfassen.

3. Gehäuse (50) nach Anspruch 1 oder 2,
umfassend einen oberen Abschnitt (62) aus Aluminium.

4. Gehäuse (50) nach einem der Ansprüche 1 bis 3,
wobei die Seitenwände (63) integral mit dem oberen Abschnitt (62) sind, und wobei die Seitenwände (63) überschüssiges Abstreifmaterial von der schwenkbaren Entlüftung (38) an dem oberen Abschnitt (62) umfassen, um die Seitenwände (63) kaltzuverfestigen.

5. Elektrochemische Zelle (32), umfassend:
- eine oder mehrere Elektroden;
- das Gehäuse (50) nach einem der Ansprüche 1 bis 4, wobei das Gehäuse (50) ausgestaltet ist, die eine oder mehreren Elektroden der elektrochemischen Zelle (32) aufzunehmen, wobei das Gehäuse (50) einen oberen Abschnitt (62) mit einer der einen oder den mehreren Elektroden zugewandten Innenfläche (52) umfasst, wobei der obere Abschnitt (62) des Gehäuses (50) ausgestaltet ist, Anschlüsse (66) der elektrochemischen Zelle (32) aufzunehmen; und
- eine untere Abdeckung (56), die ausgestaltet ist, den offenen unteren Abschnitt (58) des Gehäuses (50) abzudecken.

6. Elektrochemische Zelle (32) nach Anspruch 5,
wobei der Bruchabschnitt (80) eine erste Länge aufweist, die schwenkbaren Abschnitte (82) eine zweite Länge aufweisen, die erste Länge im Wesentlichen gleich der zweiten Länge ist, und sich die Verbindungsabschnitte (84) zwischen dem Bruchabschnitt (80) und den schwenkbaren Abschnitten (82) in einem im Wesentlichen rechten Winkel (116) von dem Bruchabschnitt (80) erstrecken; oder
wobei der Bruchabschnitt (80) eine erste Länge aufweist, die schwenkbaren Abschnitte (82) eine zweite Länge aufweisen, die erste Länge größer als die zweite Länge ist, und sich die Verbindungsabschnitte (84) zwischen dem Bruchabschnitt (80) und den schwenkbaren Abschnitten (82) in einem spitzen Winkel (115) in Relation zu dem Bruchabschnitt (80) erstrecken; oder
wobei der Bruchabschnitt (80) eine erste Länge aufweist, die schwenkbaren Abschnitte (82) eine zweite Länge aufweisen, die erste Länge kleiner als die zweite Länge ist, und sich die Verbindungsabschnitte (84) zwischen dem Bruchabschnitt (80) und den schwenkbaren Abschnitten (82) in einem stumpfen Winkel (113) von dem Bruchabschnitt (80) erstrecken.

7. Elektrochemische Zelle (32) nach Anspruch 5 oder 6,
wobei die Verbindungsabschnitte (84) eine Querschnittsbreite durch den oberen Abschnitt (62) des Gehäuses (50) umfassen und die Querschnittsbreite gleich der ersten Querschnittsbreite (100) ist; oder
wobei die Verbindungsabschnitte (84) eine Querschnittsbreite durch den oberen Abschnitt (62) des Gehäuses (50) umfassen und die Querschnittsbreite gleich der zweiten Querschnittsbreite (102) ist; oder
wobei die Verbindungsabschnitte (84) eine keilförmige Querschnittsbreite aufweisen, die von der ersten Querschnittsbreite (100) des Bruchabschnitts (80) unmittelbar angrenzend an den Bruchabschnitt (80) zu der zweiten Querschnittsbreite (102) der schwenkbaren Abschnitte (82) unmittelbar angrenzend an die schwenkbaren Abschnitte (82) keilförmig ist.

8. Elektrochemische Zelle (32) nach einem der Ansprüche 5 bis 7,
wobei der obere Abschnitt (62) des Gehäuses (50) integral mit den Seitenwänden (63) des Gehäuses (50) ist.

9. Elektrochemische Zelle (32) nach einem der Ansprüche 5 bis 8,
wobei die schwenkbare Entlüftung (38) einen geprägten Bereich (78) umfasst, der den Bruchabschnitt (80), die schwenkbaren Abschnitte (82) und die Verbindungsabschnitte (84) der schwenkbaren Entlüftung (38) umgibt, wobei der geprägte Bereich (78) eine dritte Querschnittsbreite (104) durch den oberen Abschnitt (62) des Gehäuses (50) umfasst, und die dritte Querschnittsbreite (104) größer als die erste Querschnittsbreite (100) und die zweite Querschnittsbreite (102) ist.

10. Elektrochemische Zelle (32) nach einem der Ansprüche 5 bis 9,
wobei die Nuten, die den Bruchabschnitt (80), die schwenkbaren Abschnitte (82) und die Verbindungsabschnitte (84) definieren, trapezförmige Nuten, dreieckige Nuten, halbovale Nuten, Halbschlitznuten oder eine Kombination daraus sind.

11. Elektrochemische Zelle (32) nach einem der Ansprüche 1 bis 10,
wobei die elektrochemische Zelle (32) eine prismatische Zelle, eine Lithium-Ionen(Li-Ion)-Zelle oder eine Kombination daraus ist; und/oder
wobei das Gehäuse (50) metallisch ist; und/oder
wobei der obere Abschnitt (62) eine Außenfläche (53) gegenüber der Innenfläche (52) umfasst und die schwenkbare Entlüftung (38) keine Merkmale umfasst, die sich in die Außenfläche (53) erstrecken oder aus dieser hervorragen.

12. Verfahren (130) zum Herstellen einer schwenkbaren Entlüftung (38) an einem Gehäuse (50) einer elektrochemischen Zelle (32) nach einem der vorhergehenden Ansprüche, umfassend:
- Stanzen einer Innenfläche (52) eines oberen Abschnitts (62) des Gehäuses (50) mit einem Stempel umfassend einen Bruchabschnitt (80) der schwenkbaren Entlüftung (38), schwenkbare Abschnitte (82) der schwenkbaren Entlüftung (38) auf jeder Seite des Bruchabschnitts (80) und flacher als der Bruchabschnitt (80), und Verbindungsabschnitte (84) der schwenkbaren Entlüftung (38), die sich von jedem Ende (112) des Bruchabschnitts (80) zu jedem Ende (114) der schwenkbaren Abschnitte (82) erstrecken.

13. Verfahren (130) nach Anspruch 12,
umfassend Stanzen eines geprägten Bereichs (78), der den Bruchabschnitt (80), die schwenkbaren Abschnitte (82) und die Verbindungsabschnitte (84) umgibt und flacher als der Bruchabschnitt (80), die schwenkbaren Abschnitte (82) und die Verbindungsabschnitte (84) ist,
wobei der geprägte Bereich (78) vorzugsweise gestanzt wird, bevor der Bruchabschnitt (80), die schwenkbaren Abschnitte (82) und die Verbindungsabschnitte (84) gestanzt werden.

14. Verfahren (130) nach Anspruch 12 oder 13,
wobei überschüssiges Material von einem Stanzen des Bruchabschnitts (80), der schwenkbaren Abschnitte (82) und der Verbindungsabschnitte (84) von der Innenfläche (52) des oberen Abschnitts (62) des Gehäuses (50) entlang einer seitlichen Innenfläche der Seitenwand (63) des Gehäuses (50) abgestreift wird, um die Seitenwand (63) kaltzuverfestigen.

## Revendications

1. Boîtier (50) d'une cellule électrochimique (32), comprenant:
- une portion inférieure ouverte (58) configurée pour recevoir une ou plusieurs électrodes ;
- une portion supérieure (62) opposée à la portion inférieure ouverte (58);
- des panneaux latéraux (63) s'étendant entre la portion inférieure ouverte (58) et la portion supérieure (62); et
- une ventilation articulée (38) sur une surface intérieure (52) de la portion supérieure (62) du boîtier (50) orientée vers le bas par rapport à une force gravitationnelle, dans lequel la ventilation articulée (38) comprend une portion de fracture (80), une portion d'articulation (82) sur l'un ou l'autre côté de la portion de fracture (80) s'étendant de façon sensiblement parallèle à la portion de fracture (80), et des portions de raccordement (84) s'étendant depuis l'une ou l'autre extrémité (112) de la portion de fracture (80) jusqu'à l'une ou l'autre extrémité (114) des portions d'articulation (82), dans lequel la portion de fracture (80), la portion d'articulation (82), et les portions de raccordement (84) comprennent chacune des rainures respectives qui s'ouvrent sur le boîtier (50),
dans lequel la portion de fracture (80) comprend une première largeur de section transversale (100) à travers la portion supérieure (62) du boîtier (50), les portions d'articulation (82) comprennent une deuxième largeur de section transversale (102) à travers la portion supérieure (62) du boîtier (50), et la première largeur de section transversale (100) est plus petite que la deuxième largeur de section transversale (102).

2. Boîtier (50) selon la revendication 1,
dans lequel les portions de raccordement (84) comprennent la première largeur de section transversale (100) à travers la portion supérieure (62) du boîtier (50).

3. Boîtier (50) selon la revendication 1 ou 2, comprenant une portion supérieure en aluminium (62).

4. Boîtier (50) selon une des revendications 1 à 3,
dans lequel les panneaux latéraux (63) sont monoblocs avec la portion supérieure (62), et dans lequel les panneaux latéraux (63) comprennent un excès de matériau essuyé à partir de la ventilation articulée (38) sur la portion supérieure (62) pour écrouir les panneaux latéraux (63).

5. Cellule électrochimique (32), comprenant:
- une ou plusieurs électrodes;
- le boîtier (50) selon une des revendications 1 à 4, le boîtier (50) étant configuré pour loger les une ou plusieurs électrodes de la cellule électrochimique (32), dans laquelle le boîtier (50) comprend une portion supérieure (62) ayant une surface intérieure (52) faisant face aux une ou plusieurs électrodes, dans laquelle la portion supérieure (62) du boîtier (50) est configurée pour recevoir des bornes (66) de la cellule électrochimique (32); et
- un couvercle inférieur (56) configuré pour couvrir la portion inférieure ouverte (58) du boîtier (50).

6. Cellule électrochimique (32) selon la revendication 5,
dans laquelle la portion de fracture (80) est d'une première longueur, les portions d'articulation (82) sont d'une seconde longueur, la première longueur est sensiblement égale à la seconde longueur, et les portions de raccordement (84) s'étendent entre la portion de fracture (80) et les portions d'articulation (82) à un angle sensiblement droit (116) à partir de la portion de fracture (80); ou
dans laquelle la portion de fracture (80) est d'une première longueur, les portions d'articulation (82) sont d'une seconde longueur, la première longueur est supérieure à la seconde longueur, et les portions de raccordement (84) s'étendent entre la portion de fracture (80) et les portions d'articulation (82) à un angle aigu (115) relativement à la portion de fracture (80); ou
dans laquelle la portion de fracture (80) est d'une première longueur, les portions d'articulation (82) sont d'une seconde longueur, la première longueur est inférieure à la seconde longueur, et les portions de raccordement (84) s'étendent entre la portion de fracture (80) et les portions d'articulation (82) à un angle obtus (113) à partir de la portion de fracture (80).

7. Cellule électrochimique (32) selon la revendication 5 ou 6,
dans laquelle les portions de raccordement (84) comprennent une largeur de section transversale à travers la portion supérieure (62) du boîtier (50) et la largeur de section transversale est égale à la première largeur de section transversale (100); ou
dans laquelle les portions de raccordement (84) comprennent une largeur de section transversale à travers la portion supérieure (62) du boîtier (50) et la largeur de section transversale est égale à la deuxième largeur de section transversale (102); ou
dans laquelle les portions de raccordement (84) comprennent une largeur de section transversale effilée qui s'effile depuis la première largeur de section transversale (100) de la portion de fracture (80) immédiatement adjacente à la portion de fracture (80) jusqu'à la deuxième largeur de section transversale (102) des portions d'articulation (82) immédiatement adjacente aux portions d'articulation (82).

8. Cellule électrochimique (32) selon une des revendications 5 à 7, dans laquelle la portion supérieure (62) du boîtier (50) est monobloc avec des panneaux latéraux (63) du boîtier (50).

9. Cellule électrochimique (32) selon une des revendications 5 à 8,
dans laquelle la ventilation articulée (38) comprend une zone frappée (78) entourant la portion de fracture (80), les portions d'articulation (82), et les portions de raccordement (84) de la ventilation articulée (38), la zone frappée (78) comprend une troisième largeur de section transversale (104) à travers la portion supérieure (62) du boîtier (50), et la troisième largeur de section transversale (104) est supérieure à la première largeur de section transversale (100) et la deuxième largeur de section transversale (102).

10. Cellule électrochimique (32) selon une des revendications 5 à 9,
dans laquelle les rainures définissant la portion de fracture (80), les portions d'articulation (82), et les portions de raccordement (84) sont des rainures trapézoïdales, des rainures triangulaires, des rainures demi-ovales, des rainures en demi-fentes, ou une associations de celles-ci.

11. Cellule électrochimique (32) selon une des revendications 1 à 10,
dans laquelle la cellule électrochimique (32) est une cellule prismatique, une cellule à lithium-ion (Li-ion), ou une association de celles-ci; et/ou dans laquelle le boîtier (50) est métallique; et/ou
dans laquelle la portion supérieure (62) comprend une surface extérieure (53) opposée à la surface intérieure (52) et la ventilation articulée (38) n'inclut pas de caractéristiques s'étendant dans, ou faisant saillie à partir de, la surface extérieure (53).

12. Procédé (130) de fabrication d'une ventilation articulée (38) sur un boîtier (50) d'une cellule électrochimique (32) d'une des revendications précédentes, comprenant:
- l'estampage d'une surface intérieure (52) d'une portion supérieure (62) du boîtier (50), avec un poinçon, comprenant une portion de fracture (80) de la ventilation articulée (38), des portions d'articulation (82) de la ventilation articulée (38) sur l'un ou l'autre côté de la portion de fracture (80) et moins profondes que la portion de fracture (80), et des portions de raccordement (84) de la ventilation articulée (38) s'étendant depuis l'une ou l'autre extrémité (112) de la portion de fracture (80) jusqu'à l'une ou l'autre extrémité (114) des portions d'articulation (82).

13. Procédé (130) selon la revendication 12,
comprenant l'estampage d'une zone frappée (78) entourant la portion de fracture (80), les portions d'articulation (82), et les portions de raccordement (84) et moins profonde que la portion de fracture (80), les portions d'articulation (82), et les portions de raccordement (84),
dans lequel la zone frappée (78) est de préférence estampée avant que la portion de fracture (80), les portions d'articulation (82), et les portions de raccordement (84) soient estampées.

14. Procédé (130) selon la revendication 12 ou 13,
dans lequel un excès de matériau provenant de l'estampage de la portion de fracture (80), des portions d'articulation (82), et des portions de raccordement (84) est essuyé à partir de la surface intérieure (52) de la portion supérieure (62) du boîtier (50) le long d'une surface intérieure latérale d'un panneau latéral (63) du boîtier (50) pour écrouir le panneau latéral (63).
